# EUROPÄISCHE PATENTSCHRIFT

(11) **EP 1 151 896 B1**
(45) Veröffentlichungstag und Bekanntmachung des Hinweises auf die Patenterteilung: **21.01.2004**
(21) Anmeldenummer: 01110852.9
(22) Anmeldetag: 04.05.2001
(51) Int. Cl.: B60R 1/06

(54) **Rückblickspiegelanordnung, insbesondere als Aussenspiegel für Nutzfahrzeuge**
Rear view mirror, especially an exterior mirror for lorries
Rétroviseur, en particulier rétroviseur extérieur pour véhicules utilitaires

(30) Priorität: 05.05.2000 DE 10022017
(43) Veröffentlichungstag der Anmeldung: 07.11.2001
(73) Patentinhaber: MEKRA Lang GmbH & Co. KG, 90765 Fürth (DE)
(72) Erfinder: Lang, Heinrich, 91465 Ergersheim (DE); Popp, Albrecht, 91629 Weihenzell (DE)
(74) Vertreter: Winter, Brandl, Fürniss, Hübner, Röss, Kaiser, Polte Partnerschaft

(56) Entgegenhaltungen:
- WO-A-00/46072
- DE-A- 2 537 876
- DE-A- 2 703 105
- DE-A- 2 820 883
- DE-A- 19 530 913
- DE-C- 2 660 184
- FR-A- 2 633 568
- PATENT ABSTRACTS OF JAPAN vol. 008, no. 028 (M-274), 7. Februar 1984 (1984-02-07) & JP 58 185340 A (SUZUKI JIDOSHA KOGYO KK), 29. Oktober 1983 (1983-10-29)
- PATENT ABSTRACTS OF JAPAN vol. 010, no. 365 (M-542), 6. Dezember 1986 (1986-12-06) & JP 61 160332 A (YAMAHA MOTOR CO LTD), 21. Juli 1986 (1986-07-21)
- PATENT ABSTRACTS OF JAPAN vol. 006, no. 101 (M-135), 10. Juni 1982 (1982-06-10) & JP 57 033044 A (YAMAHA MOTOR CO LTD), 23. Februar 1982 (1982-02-23)
- PATENT ABSTRACTS OF JAPAN vol. 003, no. 016 (M-048), 10. Februar 1979 (1979-02-10) & JP 53 142738 A (NISSAN DIESEL MOTOR CO LTD), 12. Dezember 1978 (1978-12-12)

## Beschreibung

Die Erfindung betrifft eine Rückblickspiegelanordnung insbesondere als Außenspiegel für Nutzfahrzeuge gemäß dem Oberbegriff des Anspruchs 1.

Derartige Außenspiegel sind in unterschiedlichsten Konstruktionen aus dem Stand der Technik bekannt. In einem Gehäuseteil, das in geeigneter Weise mit der Karosserie des Fahrzeugs verbunden ist, ist eine Spiegelscheibe angeordnet, die mittels eines Schwenkmechanismus zwischen ihr und dem Gehäuseteil relativ zum Gehäuse verstellbar gelagert ist. Das Gehäuseteil selbst ist in der Regel ein Spritzgußteil aus massivem Kunststoff, das meist als Wanne ausgebildet ist, in die weitere Spiegelbestandteile oder entsprechende Anbringungspunkte eingesetzt sind. Insbesondere für große LKW- und Omnibusspiegel werden oftmals als tragendes Element für den Außenspiegel Rohr- oder Plattenkonstruktionen verwendet, die direkt mit dem zur Karosserie führenden Spiegelhalter verbunden sind, wie dies beispielsweise aus der EP-A-0 590 510 bekannt ist. Das Gehäuseteil dient dann nur noch zur Abdeckung der Spiegelscheiben-Rückseite und der Schwenkmechanismen sowie zur aerodynamischen Verkleidung des Außenspiegels. Derartige Konstruktionen sind äußerst aufwendig und schwergewichtig.

Ein Problem dieser Rohr- und Plattenkonstruktionen besteht darin, daß vergleichsweise starke Vibrationen während des Betriebs des Fahrzeuges auftreten. Um diese starken Vibrtionen zu reduzieren, ist es aus der EP 0 865 967 A2 bekannt eine tragende Rohrstruktur mit einem geschäumten Formteil zu umgeben. Nachteilig hierbei ist es, dass die Gesamtkonstruktion vergleichsweise schwer ist.

Eine sehr leichte Konstruktion, die sich für kleinere Spiegel eignet, ist aus der DE 44 29 604 A1 bekannt. Hierbei wurde die Rohrkonstruktion völlig weggelassen und das Schaumteil selbst ist als tragende Struktur ausgebildet. Hierzu wird insbesondere Gradientenschaum einstückig oder aus mehreren Schalen zusammengesetzt verwendet.

Ausgehend von der gattungsgemässen EP 0 865 967 A2 ist es daher Aufgabe der vorliegenden Erfindung, eine ausreichend stabile Rückblickspiegelanordnung anzugeben, die dennoch eine möglichst geringe Vibrationsanfälligkeit zeigt.

Die Lösung dieser Aufgabe erfolgt durch die Merkmale des Anspruchs 1.

Dadurch, daß wenigstens Zwei eine Hohlraüme im Träger mit einer Füllmasse ausgefüllt ist, die aus einem anderen Material als der Träger besteht oder die eine andere Dichte als der Träger aufweist, läßt sich das Vibrationsverhalten durch entsprechende Materialwahl gezielt beeinflussen. Zusätzlich kann die Füllmasse auch zu einer erhöhten Stabilität des Trägers führen, sofern sich die Füllmasse fest mit der Innenwand des oder der Hohlräume verbindet.

Durch eine Mehrzahl von Hohlräumen in dem Träger können diese gezielt an bestimmten Stellen vorgesehen werden. Die Auswahl der Stellen erfolgt experimentell erfolgen, wobei eine möglichst hohe Vibrationsdämpfung angestrebt wird.

Die Träger mit Hohlräumen lassen sich mittels Spritzgießen, Schäumverfahren, wie Thermoplastschaumguß, oder Blasverfahren, wie Extrusionsblasverfahren herstellen. Hierzu werden in die jeweilige Form für den Träger den jeweiligen Hohlräumen entsprechende Negativformen eingelegt bzw. die jeweiligen Formen weisen diese bereits auf.

Gemäß einer vorteilhaften Ausgestaltung der Erfindung wird zur zusätzlichen Stabilisierung eine Versteifungsstruktur in wenigstens einen Hohlraum eingebracht. Dies kann zum einen dadurch geschehen, daß ein separates Bauteil in den Hohlraum eingebracht wird oder daß die Wandung des Hohlraums mit Versteifungsrippen versehen wird. (Anspruch 2)

Gemäß einer weiteren vorteilhaften Ausgestaltung der Erfindung besteht die Füllmasse in den Hohlräumen aus Kunststoffschaum, wie PU-Schaum, Gradientenschaum, Mehrkomponenten-Hartschaum etc., der sich fest mit den Innenwandungen der Hohlräume verbindet und somit die Stabilität des Trägers erhöht. Darüber hinaus kann durch geeignete Dichtewahl des Schaums oder durch dessen Weichheit das Schwingungsverhalten des Trägers günstig beeinflußt werden, so daß an Nutzfahrzeugen unweigerlich auftretende Vibrationen stark gedämpft werden und folglich weniger Verschleiß entsteht. (Anspruch 3)

Zusätzlich oder alternativ läßt sich in den Hohlraum, in die Hohlräume oder in einen Teil der Hohlräume eine zähflüssige Masse, insbesondere ein Gel oder eine gallertartige Füllmasse einfüllen, um damit ebenfalls das Schwingungs- und Dämpfungsverhalten gezielt zu beeinflussen. (Anspruch 4)

Gemäß einer weiteren vorteilhaften Ausgestaltung der Erfindung läßt sich in den Hohlraum, in die Hohlräume oder in einen Teil der Hohlräume zusätzlich oder alternativ Granulat und/oder Sand einfüllen. Hierbei kann die Füllmasse ausschließlich aus Sand oder Granulat oder einer Mischung davon oder als Beimischung zu dem Gel, der Gallertmasse oder dem Schaum bestehen. Auch hierdurch wird zum einen die Stabilität positiv beeinflußt, und zum anderen läßt sich das Schwingungs- und Dämpfungsverhalten gezielt beeinflussen. (Anspruch 5)

Weitere Einzelheiten, Merkmale und Vorteile der Erfindung ergeben sich aus der nachfolgenden Beschreibung einer bevorzugten Ausführungsform der Erfindung anhand der Zeichnung.

Es zeigt:
Fig. 1A eine schematische Darstellung einer ersten Ausführungsform der Erfindung mit einem Träger in Form eines geblasenen Kunststoffhohlkörpers mit einem einzigen durchgehenden Hohlraum, der ausgeschäumt ist,
Fig. 1B einen Schnitt entlang der Linie A-A in Fig. 1A,
Fig. 2A eine perspektivische Ansicht einer zweiten Ausführungsform der Erfindung mit einem Rückblickspiegel, der einen Träger in Form von zwei Trägerarmen aufweist, der einen Träger mit zwei Trägerarmen aufweist,
Fig. 2B eine Schnittdarstellung der Ausführungsform nach Fig. 2A,
Fig. 3 eine dritte Ausführungsform der Erfindung mit einem Träger in Form eines Kunststoffhohlkörpers mit einer Mehrzahl von Hohlräumen, und
Fig. 4 eine vierte Ausführungsform der Erfindung mit einem Träger aus einem geblasenen Kunststoffhohlkörper mit zusätzlicher Versteifungsstruktur.

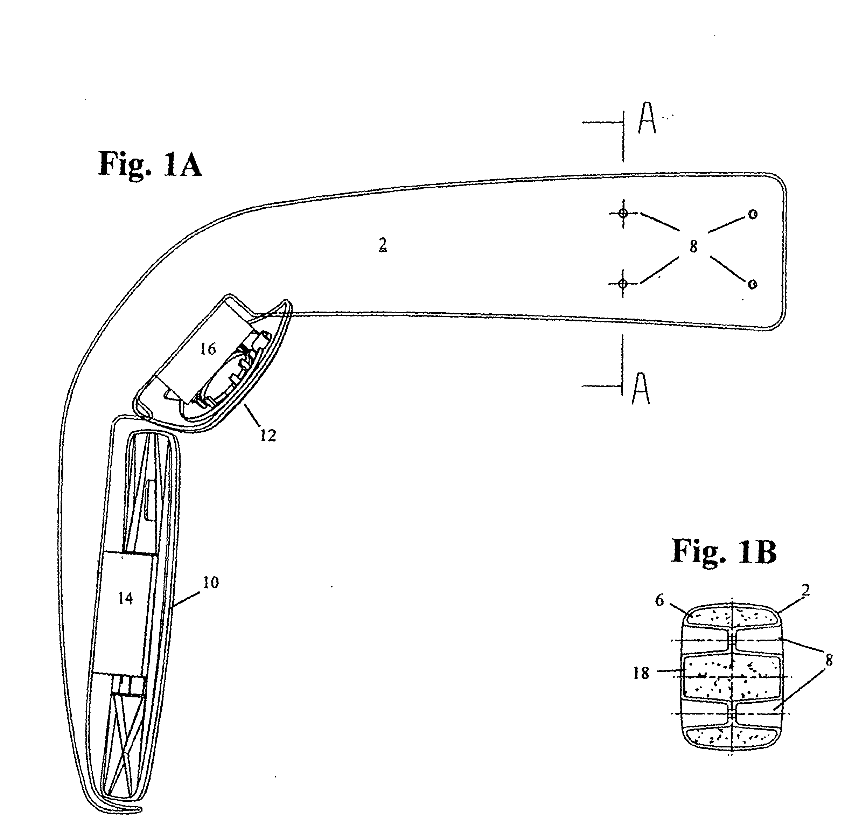

Die Figuren 1A und 1B zeigen schematisch eine erste Ausführungsform der Erfindung. Die Rückblickspiegelanordnung umfaßt einen Träger 2 in Form eines aus einem extrudierten Vorformling geblasenen Kunststoffhohlkörpers 2 mit einer geschlossenen Wand 4, die einen Hohlraum 6 umschließt. Am fahrzeugseitigen Ende des Kunststoffhohlkörpers 2 sind Schraublöcher 8 vorgesehen, um die Träger 2 bzw. die Rückblickspiegelanordnung mit einem Fahrzeug zu verbinden. An dem von dem Fahrzeug abgewandten Ende des Kunststoffhohlkörpers 2 ist in den entsprechenden Ausnehmungen ein erster Spiegel 10 und ein zweiter Spiegel 12 montiert. Beide Spiegel 10 und 12 umfassen einen Verstellmechanismus 14 bzw. 16, mittels dem sie an dem Kunststoffhohlkörper 2 montiert sind. Die Wand 4 des Kunststoffhohlkörpers 2 ist an Stellen hoher Belastung dicker als an Stellen mit geringerer Belastung ausgebildet (nicht dargestellt). Wie in Fig. 1B mittels Punktierung dargestellt ist, ist der gesamte Hohlraum 6 mit einer Füllmasse 18 in Form eines PU-Schaums, Gradientenschaums usw. ausgeschäumt.

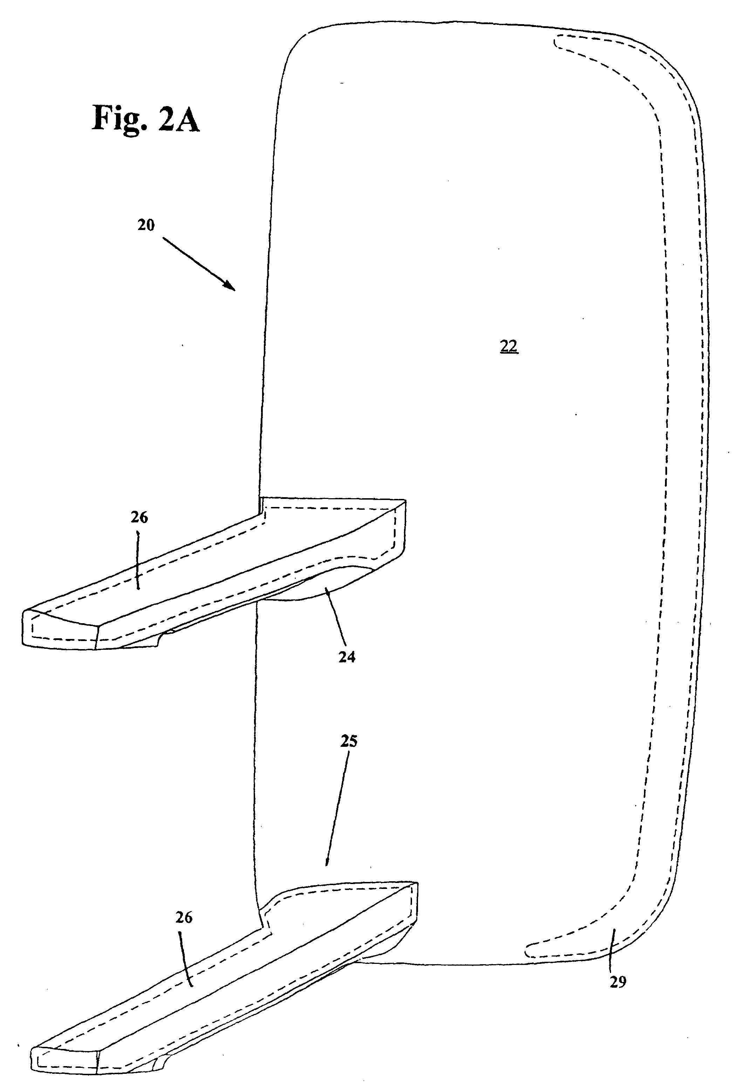

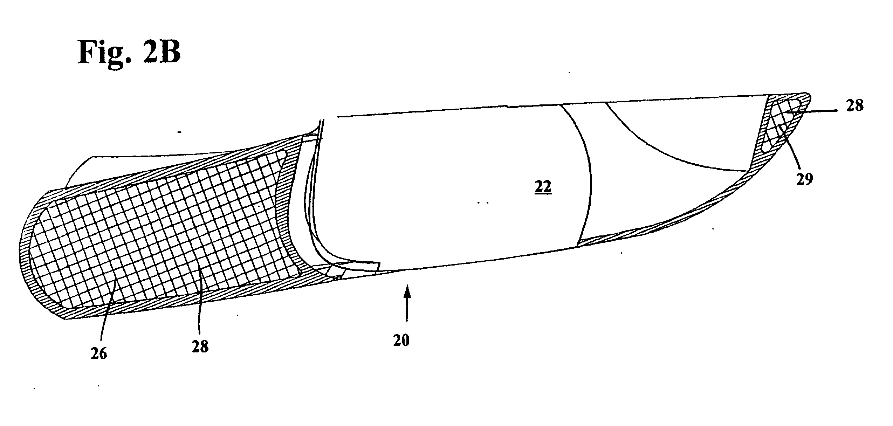

Die Figuren 2A und 2B zeigen eine zweite Ausführungsform der Erfindung mit einem Träger 20, der ein schalenförmiges Spiegelgehäuse 22 und einen oberen und einen unteren sich vom Spiegelgehäuse parallel wegersteckenden Trägerarm 24 und 25 umfaßt. Die beiden Trägerarme 24 und 25 sind hohl und weisen jeweils einen Hohlraum 26 auf, der mit Füllmasse 28 ausgeschäumt ist. Der Träger 20 umfaßt an dem vom Fahrzeug abgewandten Ende des Spiegelgehäuses 22 einen dritten Hohlraum 29, der sich sich in Längsrichtung im Randbereich des Spiegelgehäuses 22 erstreckt und der ebenfalls mit Füllmasse 28 ausgeschäumt ist.

Als Füllmasse 28 wird vorzugsweise PU-Schaum, ...?? verwendet. Durch das Ausschäumen der Hohlräume 26 und 29 wird zum einen die Stabilität verbessert, da sich der Schaum in den Hohlräumen 26 und 29 mit der Innenwandung verbindet bzw. an dieser haftet, und zum anderen wird durch das Ausschäumen das Schwingungsverhalten positiv beeinflußt, d.h. Vibrationen gedämpft.

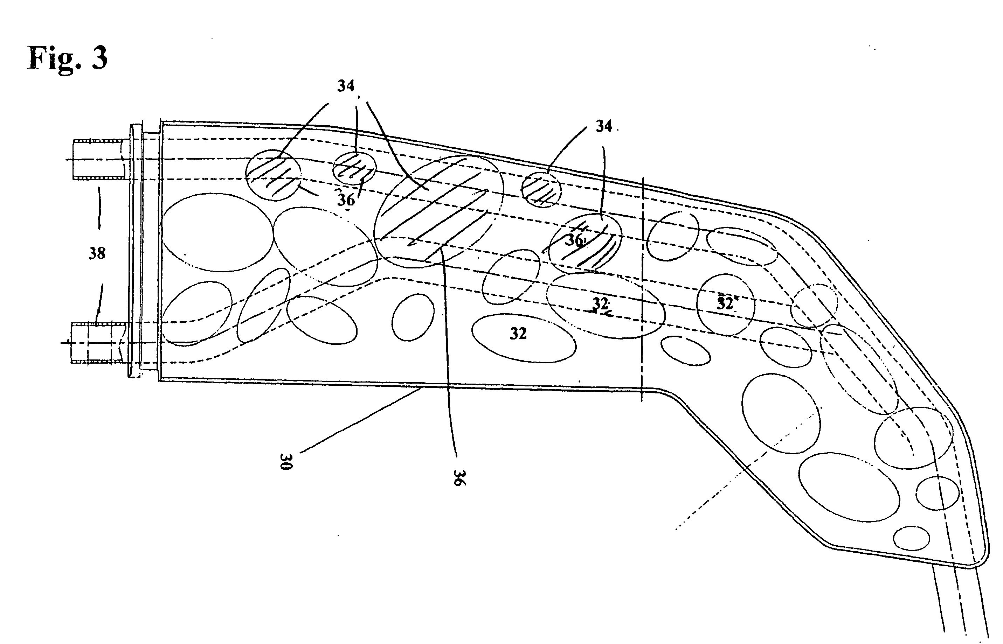

Fig. 3 zeigt eine dritte Ausführungsform der Erfindung mit einem geschäumten Träger 30, der eine Mehrzahl blasenförmigen Hohlräumen 32 und 34 aufweist. Hierbei sind die Hohlräume 32 leer, während die Hohlräume 34 mit Füllmasse 36 gefüllt sind. Durch die Mehrzahl der Hohlräume 32, 34 wird zum einen das Gewicht reduziert und zusätzlich wird durch Wandungen zwischen den Hohlräumen 32, 34 die Stabilität erhöht. Durch das Füllen eines Teils der Hohlräume, nämlich der Hohlräume 34 mit Füllmasse 36 läßt sich wiederum das Schwingungsverhalten gezielt derart beeinflussen, daß weniger Vibrationen auftreten, bzw. daß die Vibrationen gedämpft werden. Zusätzlich sind bei der dritten Ausführungsform noch Trägerrohre 38 aus Metall vorgesehen, durch die die Stabilität des Trägers 30 zusätzlich erhöht wird.

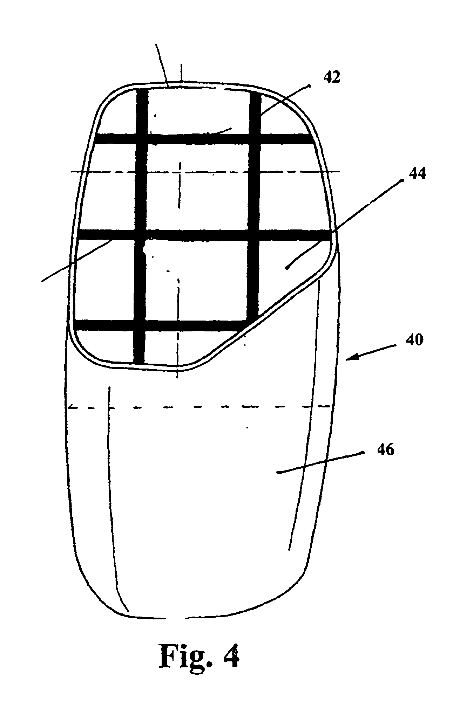

Fig. 4 zeigt eine vierte Ausführungsform der Erfindung mit einem Träger 40 in Form eines Kunststoffhohlkörpers, bei dem an der Innenwandung des Kunststoffhohlkörpers 40 gitterförmige Versteifungsrippen 42 vorgesehen sind. Der Kunststoffhohlkörper 40 umschließt einen durchgehenden Hohlraum 44, der teilweise mit einem Gel 46 als Füllmasse gefüllt ist. Die teilweise Füllung des Hohlraums 44 mit Gel 46 ist durch eine strichlierte Linie dargestellt. Die gitterförmigen Versteifungsrippen 42 lassen sich durch entsprechende unterschiedliche Wandstärken des Vorformlings vor dem Aufblasen des Vorformlings in der Blasform bereitstellen. Durch die gitterförmigen Versteifungsrippen 42 wird die Stabilität erhöht. Durch das Gel 46 und dessen Füllgrad im Hohlraum 44 läßt sich gezielt das Dämpfungsverhalten beeinflussen.

### Bezugszeichenliste:

- 2: Träger, Kunststoffhohlkörper
- 4: Wand von 2
- 6: Hohlraum in 2
- 8: Schraublöcher
- 10: erster Spiegel
- 12: zweiter Spiegel
- 14: Verstellmechanismus erster Spiegel
- 16: Verstellmechanismus zweiter Spiegel
- 18: Füllmasse

- 20: Träger, Kunststoffhohlkörper
- 22: Spiegelgehäuse
- 24: oberer Trägerarm
- 25: unterer Trägerarm
- 26: erster und zweiter Hohlraum in 24, 25
- 28: Füllmasse
- 29: Hohlraum in 22

- 30: Träger, Kunstoffhohlkörper
- 32: blasenförmige Hohlräume in 30, leer
- 34: blasenförmige Hohlräume in 30, gefüllt
- 36: Füllmasse
- 38: Trägerrohre

- 40: Träger, Kunstoffhohlkörper
- 42: Versteifungsrippen
- 44: Hohlraum
- 46: Gel, Füllmasse

## Patentansprüche

1. Rückblickspiegelanordnung, insbesondere als Außenspiege, für Nutzfahrzeuge mit
einem an einem Fahrzeug anbringbaren Träger (2; 20; 30; 40), und
wenigstens einem an dem Träger (2; 20; 30; 40) befestigten oder in den Träger (2; 20; 30; 40) integrierten, vorzugsweise verstellbaren, Spiegel (10, 12),
**dadurch gekennzeichnet,**
**dass** der Träger (2; 20; 30; 40) wenigstens Zwei Hohlräume (6; 26, 29; 32,34; 44) aufweist, von denen in wenigstens einem wenigstens teilweise eine Füllmasse (18; 28; 36; 46) eingebracht ist, die aus einem anderen Material als der Träger besteht oder die eine ander Dichte als der Träger aufweist.

2. Rückblickspiegelanordnung nach Anspruch 1, **dadurch gekennzeichnet dass** in wenigstens einen Hohlraum ( 6; 26, 29; 32, 34; 44) eine Versteifungsstruktur (42) eingebracht ist.

3. Rückblickspiegelanordnung nach einem der vorhergehenden Ansprüche, **dadurch gekennzeichnet, dass** die Füllmasse (18; 28; 36; 46) ein Kunststoffschaum, insbesondere Gradientenschaum, Mehrkomponenten-Hartschaum oder PU-Schaum ist.

4. Rückblickspiegelanordnung nach einem der vorhergehenden Ansprüche, **dadurch gekennzeichnet, dass** die Füllmasse (18; 28; 36; 46) eine zähflüssige Masse, insbesondere Gel oder Galert ist.

5. Rückblickspiegelanordnung nach einem der vorhergehenden Ansprüche, **dadurch gekennzeichnet, dass** die Füllmasse (18; 28; 36; 46) Granulat, insbesondere Kunststoffgranulat, und/oder Sand enthält.

6. Rückblickspiegelanordnung nach einem der vorhergehenden Ansprüche, **dadurch gekennzeichnet, dass** die Füllmasse (18; 28; 36; 46) eine Mischung aus Gel und Granulat umfaßt.

## Claims

1. A rearview mirror arrangement, especially as an outside mirror for commercial vehicles, with a carrier (2; 20; 30; 40) capable of being installed on a vehicle, and at least one, preferably adjustable mirror (10, 12) affixed to said carrier (2; 20; 30; 40) or integrated in the carrier (2; 20; 30; 40),
**characterized in that**
the carrier (2; 20; 30; 40) possesses at least two hollow spaces (6; 26, 29; 32, 34; 44) in at least one of which a filling material (18; 28; 36; 46) is introduced at least partly, which filling material consists of a material other than that of the carrier, or which evidences a density other than that of the carrier.

2. A rearview mirror arrangement in accord with claim 1, **characterized in that** in at least one hollow space (6, 26, 29; 32, 34; 44) a stiffening structure (42) is installed.

3. A rearview mirror arrangement in accordance with any one of the preceding claims, **characterized in that** the filling material (18; 28; 36; 46) is a plastic foam, in particular a gradient foam, a multicomponent rigid foam, or a polyurethane foam.

4. A rearview mirror arrangement in accordance with any one of the preceding claims, **characterized in that** the filling material (18; 28; 36; 46) is a viscous material, in particular a gel or a gelatine.

5. A rearview mirror arrangement in accordance with any one of the preceding claims, **characterized in that** the filling material (18; 28; 36; 46) contains granulate, in particular plastic granulate and/or sand.

6. A rearview mirror arrangement in accordance with any one of the preceding claims, **characterized in that** the filling material (18; 28; 36; 46) comprises a mixture of gel and granulate.

## Revendications

1. Agencement de rétroviseur, en particulier formant rétroviseur extérieur pour véhicules utilitaires, avec un élément porteur (2 ; 20 ; 30 ; 40) pouvant être installé sur un véhicule et avec au moins un miroir de préférence réglable (10, 12) fixé à l'élément porteur (2 ; 20 ; 30 ; 40) ou intégré dans l'élément porteur (2 ; 20 ; 30 ; 40), **caractérisé en ce que** l'élément porteur (2 ; 20 ; 30 ; 40) comporte au moins deux cavités (6 ; 26, 29 ; 32, 34 ; 44) dont au moins une est remplie au moins en partie d'une masse de remplissage (18 ; 28 ; 36 ; 46) qui est constituée d'un matériau différent de celui de l'élément porteur ou qui présente une densité différente de celle de l'élément porteur.

2. Agencement de rétroviseur selon la revendication 1, **caractérisé en ce qu'**une structure raidisseuse (42) est introduite dans au moins une cavité (6 ; 26, 29; 32, 34 ; 44).

3. Agencement de rétroviseur selon une des revendications précédentes, **caractérisé en ce que** la masse de remplissage (18 ; 28 ; 36 ; 46) est une mousse synthétique, en particulier une mousse à gradient, une mousse rigide à plusieurs composants ou une mousse polyuréthanne.

4. Agencement de rétroviseur selon une des revendications précédentes, **caractérisé en ce que** la masse de remplissage (18 ; 28 ; 36 ; 46) est une masse visqueuse, en particulier du gel ou de la gélatine.

5. Agencement de rétroviseur selon une des revendications précédentes, **caractérisé en ce que** la masse de remplissage (18 ; 28 ; 36 ; 46) contient du granulat, en particulier du granulat synthétique, et/ou du sable.

6. Agencement de rétroviseur selon une des revendications précédentes, **caractérisé en ce que** la masse de remplissage (18 ; 28 ; 36 ; 46) comprend un mélange de gel et de granulat.
